# FASCICULE DE BREVET EUROPEEN

(11) **EP 4 008 609 B1**
(45) Date de publication et mention de la délivrance du brevet: **17.07.2024**
(21) Numéro de dépôt: 21211376.5
(22) Date de dépôt: 30.11.2021
(51) Int. Cl.: B62D 25/08, B62D 65/02, B62D 65/12

(54) **AGENCEMENT POUR UNE CAISSE D'UN VÉHICULE AUTOMOBILE**
ANORDNUNG FÜR EINE KAROSSERIE EINES KRAFTFAHRZEUGS
ARRANGEMENT FOR A BODY OF A MOTOR VEHICLE

(30) Priorité: 02.12.2020 FR 2012511
(43) Date de publication de la demande: 08.06.2022
(73) Titulaire: Renault s.a.s, 92100 Boulogne Billancourt (FR)
(72) Inventeur: CABRAL, Guillaume, 77170 BRIE COMTE ROBERT (FR); CHAILLOU, Benoit, 78280 GUYANCOURT (FR)
(74) Mandataire: Renault Group

(56) Documents cités:
- DE-A1- 4 117 017
- JP-A- 2006 044 427
- US-B1- 6 464 239

## Description

L'invention concerne un agencement pour une caisse d'un véhicule automobile ainsi qu'un dispositif d'indexage d'un tel agencement. L'invention concerne également un véhicule automobile comprenant au moins ledit agencement et/ou au moins ledit dispositif d'indexage.

Classiquement, les véhicules automobiles sont équipés d'un système de suspension comprenant au moins un amortisseur monté au niveau d'une caisse du véhicule, notamment au niveau d'un passage de roue du véhicule. Le corps de l'amortisseur est fixé sur un support et nécessite un positionnement, ou agencement, particulier relativement à celui-ci.

A cette fin, il est connu d'intégrer à un tel agencement de l'amortisseur un dispositif d'indexage comprenant un organe d'indexage avant et un organe d'indexage arrière. Actuellement, on différencie de tels organes d'indexage, chacun adoptant une forme particulière dédiée au positionnement de l'amortisseur. Un tel agencement présente l'inconvénient de multiplier les références et la gestion des stocks de pièces détachées, entraînant de ce fait, d'une part, un risque d'erreur lors du montage et, d'autre part, un surcoût de production dû à la démultiplication des références.

Le document DE 41 17 017 A1 décrit un agencement pour une caisse d'un véhicule selon le préambule de la revendication 1.

La présente invention s'inscrit dans ce contexte et vise à proposer un agencement comprenant un dispositif d'indexage permettant avantageusement la simplification de l'assemblage de l'agencement d'une ou pour une caisse d'un véhicule automobile et la simplification de la gestion des stocks de pièces.

A cette fin, l'invention propose un agencement pour une caisse d'un véhicule automobile, l'agencement comprenant un support pour un système de suspension d'une roue du véhicule, un amortisseur dont un corps est apte à être fixé sur ledit support et un dispositif d'indexage comprenant un premier organe d'indexage et un deuxième organe d'indexage rapportés et chacun monté solidaire du support. L'agencement est particulièrement caractérisé en ce que le premier organe d'indexage et le deuxième organe d'indexage sont chacun configurés pour indifféremment assurer l'indexage avant et l'indexage arrière de l'amortisseur, notamment du corps de l'amortisseur, relativement au support de sorte à assurer son positionnement adéquat relativement audit support.

Le premier organe d'indexage et le deuxième organe d'indexage peuvent comprendre chacun une aile coopérant avec le corps de l'amortisseur de sorte à assurer son positionnement adéquat relativement au support.

Notamment, au moins l'aile du premier organe d'indexage et/ou l'aile du deuxième organe d'indexage présente(nt) une structure et/ou une géométrie symétrique(s) ou sensiblement symétrique(s) relativement à un plan médian passant par l'aile propre à l'organe d'indexage correspondant.

Une première extrémité et une deuxième extrémité de l'aile du premier organe d'indexage et/ou de l'aile du deuxième organe d'indexage peuvent comporter chacune un bord incliné relativement à un bord principal libre de l'aile, le bord principal libre reliant lesdites première extrémité et deuxième extrémité entre elles et le bord incliné définissant, relativement au support, un passage de réception et de guidage du corps de l'amortisseur.

Le bord incliné de la première extrémité de l'aile et le bord incliné de la deuxième extrémité de l'aile du premier organe d'indexage et/ou de l'aile du deuxième organe d'indexage peuvent présenter une forme complémentaire d'au moins une partie du corps de l'amortisseur.

Selon un exemple particulier de réalisation, le bord incliné de la première extrémité de l'aile et le bord incliné de la deuxième extrémité de l'aile du premier organe d'indexage et/ou de l'aile du deuxième organe d'indexage peuvent présenter un angle α, relativement à une partie du support s'étendant au droit du bord incliné correspondant, égal ou sensiblement égal, l'angle α pouvant être compris entre 20 et 85°.

Additionnellement, le premier organe d'indexage et/ou le deuxième organe d'indexage peu(ven)t comporter une embase de fixation, plane ou essentiellement plane, délimitant au moins une zone de fixation de l'organe d'indexage correspondant sur le support, l'embase de fixation étant reliée à l'aile.

De manière optionnelle, l'embase de fixation peut comprendre une pluralité de zones de fixation.

Notamment, le premier organe d'indexage et/ou le deuxième organe d'indexage peu(ven)t être monté(s) solidaire(s) du support par soudage, notamment par au moins un point de soudure.

Optionnellement, le premier organe d'indexage et/ou le deuxième organe d'indexage peu(ven)t comporter au moins un renfort s'étendant entre l'aile et l'embase de fixation de l'organe d'indexage correspondant.

Le premier organe d'indexage et/ou le deuxième organe d'indexage peu(ven)t comprendre une patte de guidage de la position de l'organe d'indexage considéré relativement au support, la patte de guidage pouvant s'étendre transversalement à l'aile de l'organe d'indexage correspondant et/ou la patte de guidage pouvant être issue de l'embase de fixation de l'organe d'indexage correspondant et pouvant s'étendre parallèlement ou sensiblement parallèlement à ladite portion de fixation.

Le premier organe d'indexage et le deuxième organe d'indexage peuvent présenter une structure et/ou une géométrie identique(s) ou sensiblement identique(s).

Selon un mode de réalisation non revendiqué, un dispositif d'indexation pour un agencement de carrosserie de véhicule ou pour un agencement de carrosserie de véhicule tel que décrit ci-dessus est également mentionné. Ce dispositif d'indexage comprend un premier organe d'indexage et un deuxième organe d'indexage rapportés et configurés pour être montés solidaires d'un support, caractérisé en ce que le premier organe d'indexage et le deuxième organe d'indexage sont configurés pour indifféremment assurer l'indexage avant et l'indexage arrière de l'amortisseur, notamment d'un corps de l'amortisseur, relativement au support de sorte à assurer son positionnement adéquat relativement audit support.

Notamment, dans un tel dispositif d'indexage, le premier organe d'indexage et le deuxième organe d'indexage peuvent chacun comprendre une aile configurée pour coopérer avec le corps d'un même amortisseur de sorte à assurer son positionnement adéquat relativement au support.

L'invention concerne enfin un véhicule automobile comprenant au moins un agencement selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 représente une vue de face d'un exemple de réalisation d'un agencement pour une caisse d'un véhicule automobile comprenant un dispositif d'indexage d'un amortisseur.
[Fig. 2] La figure 2 représente une vue en perspective de l'agencement illustré à la figure 1, sans l'amortisseur.
[Fig. 3] La figure 3 représente une vue en perspective de l'agencement illustré à la figure 1.

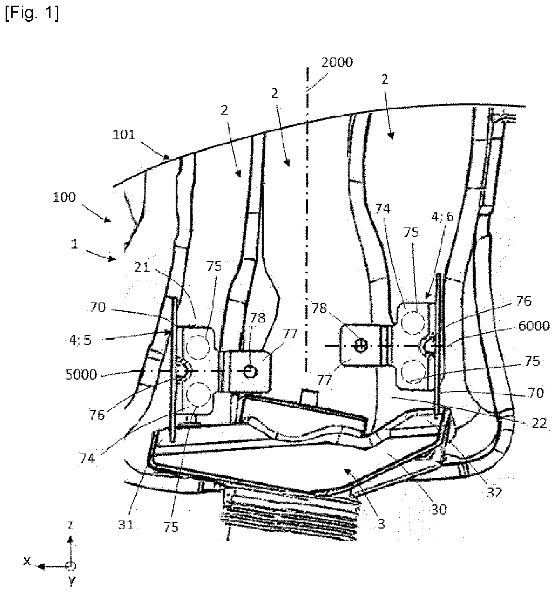

Les figures 1 à 3 illustrent un exemple de réalisation d'un agencement 1 d'une ou pour une caisse d'un véhicule 100 automobile, notamment un agencement mis en oeuvre au niveau d'un passage de roue 101 du véhicule 100. Notamment, un tel agencement peut être mis en oeuvre au niveau d'un passage de roue 101 avant ou au niveau d'un passage de roue 101 arrière. L'agencement 1 comprend un support 2 pour un système de suspension d'une roue, non représentée, du véhicule 100, un tel support 2 comprenant, par exemple une structure en tôle emboutie. L'agencement 1 comprend, en outre, un amortisseur 3 dont un corps 30 est apte à être fixé sur ledit support 2 et un dispositif d'indexage 4.

Dans l'ensemble de la description ci-après, la direction désignée comme longitudinale correspond à un axe d'avancement X en ligne droite du véhicule 100, la direction verticale correspond à un axe vertical Z, orthogonal à l'axe X et orienté verticalement lorsque le véhicule 100 se trouve sur un sol horizontal. Enfin, la direction transversale correspond à un axe Y, orthogonal aux axes X et Z.

Selon l'invention, le dispositif d'indexage 4 selon l'invention comprend deux pièces distinctes : un premier organe d'indexage 5 et un deuxième organe d'indexage 6. On entend par « organe d'indexage » un organe configuré pour permettre la mise en positionnement, c'est-à-dire le guidage jusqu'à une position adéquate prédéfinie, de l'amortisseur 3 au sein de l'agencement 1, en particulier relativement au support 2. Autrement dit, le dispositif d'indexage 4 permet d'assurer que l'amortisseur 3 soit correctement positionné relativement au support 2 lorsque l'on approche l'amortisseur 3 du support 2.

Le dispositif d'indexage 4 est ainsi configuré pour être disposé sur le support 2 préalablement à l'installation de l'amortisseur 3. Par ailleurs, le dispositif d'indexage 4 selon l'invention est destiné à demeurer sur le véhicule 100 ultérieurement à l'installation de l'amortisseur 3 au sein de l'agencement.

Le premier organe d'indexage 5 et le deuxième organe d'indexage 6 sont rapportés et montés solidaires d'un support, notamment du même support 2. Ils sont particulièrement configurés pour indifféremment assurer l'indexage avant et l'indexage arrière de l'amortisseur 3, notamment du corps 30 de l'amortisseur 3, relativement au support 2.

En d'autres termes, d'une part le premier organe d'indexage 5 peut être monté solidaire du support 2 de sorte à assurer l'un de l'indexage avant ou de l'indexage arrière de l'amortisseur 3 relativement au support 2, et, d'autre part le deuxième organe d'indexage 6 peut être monté solidaire du support 2 de sorte à assurer l'autre de l'indexage avant ou de l'indexage arrière de l'amortisseur 3 relativement au support 2. Les termes « avant » et « arrière » sont notamment définis le long de l'axe d'avancement X du véhicule 100.

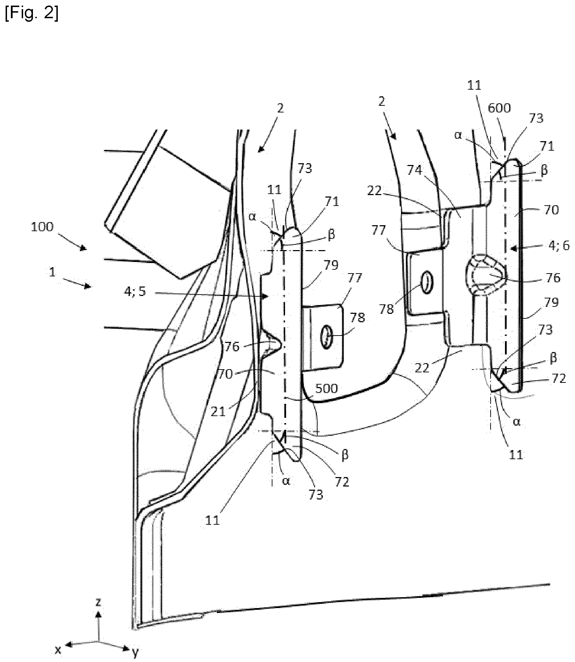

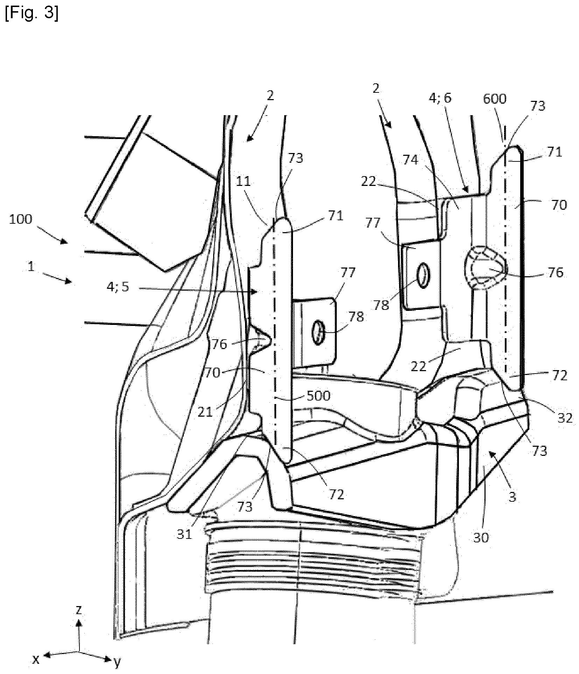

De manière générale, le premier organe d'indexage 5 et le deuxième organe d'indexage 6, davantage détaillés aux figures 2 et 3 ont, de préférence des formes d'équerres ou de cornières. Ils comprennent chacun une aile 70 d'équerre coopérant avec le corps 30 de l'amortisseur 3 de sorte à assurer le positionnement adéquat de celui-ci relativement au support 2, c'est-à-dire à assurer son guidage.

Particulièrement, l'aile 70 du premier organe d'indexage 5 peut présenter une structure et/ou une géométrie symétrique(s) ou sensiblement symétrique(s) relativement à un plan médian primaire 5000, propre au premier organe d'indexage 5 et passant par l'aile 70. On entend alors par « géométrie » une forme et/ou des dimensions des organes d'indexage 5, 6. Un tel plan médian primaire 5000 passe par un milieu de l'aile 70 mesuré le long d'une direction définie par un axe d'extension 500 de l'aile 70 du premier organe d'indexage 5. De manière particulière, un tel plan médian primaire 5000 s'étend perpendiculairement à l'aile 70, c'est-à-dire orthogonalement à l'axe d'extension 500 de ladite aile 70.

De manière similaire ou alternative, l'aile 70 du deuxième organe d'indexage 6 peut présenter une structure et/ou une géométrie symétrique(s) ou sensiblement symétrique(s) relativement à un plan médian secondaire 6000, notamment distinct du plan médian primaire 5000 et propre au deuxième organe d'indexage 6. Un tel plan médian secondaire 6000 passe par l'aile 70, notamment par un milieu de l'aile 70, le long d'une direction définie par un axe d'extension 600 de l'aile 70 du deuxième organe d'indexage 6. Tel que précédemment exposé, un tel plan médian secondaire 6000 s'étend perpendiculairement à l'aile 70, c'est-à-dire orthogonalement à l'axe d'extension 600 de ladite aile 70.

On entend par « sensiblement symétrique » que l'aile 70 peut présenter au moins une partie des options suivantes : des dimensions ou une forme, relatives à la géométrie, ou tout ou partie des caractéristiques telles qu'exposées dans la présente description, relatives à la structure, symétriques relativement au plan médian primaire 5000 ou secondaire 6000 de l'organe d'indexage 5, 6 considéré.

On entend par « symétrique » que l'aile 70 présente des dimensions, une forme et des caractéristiques telles qu'exposées dans la présente description, symétriques relativement au plan médian, primaire 5000 ou secondaire 6000, de l'organe d'indexage 5, 6 considéré.

Il est entendu que, dans l'ensemble de la description ci-après, toute caractéristique décrite en référence à « un organe d'indexage », au « premier organe d'indexage 5 » ou au « deuxième organe d'indexage 6 » peut s'étendre au premier organe d'indexage 5 et/ou au deuxième organe indexage 6. Aussi, les éléments similaires propres au premier organe d'indexage 5 et/ou au deuxième organe d'indexage 6 seront indiqués par des références identiques dans les différentes figures.

En outre, au sein de l'agencement 1, le premier organe d'indexage 5 et le deuxième organe d'indexage 6 peuvent, selon un exemple particulier illustré, présenter une structure et/ou une géométrie identique(s) ou sensiblement identique(s).

Optionnellement, l'aile 70 du premier organe d'indexage 5 et/ou l'aile 70 du deuxième organe d'indexage 6 comporte(nt) une première extrémité 71 et une deuxième extrémité 72 qui délimitent chacune l'aile 70 considérée le long de la direction définie par l'axe d'extension 500, 600 qui lui est propre.

L'aile 70 comprend, en outre, un bord principal libre 79 qui relie de telles première extrémité 72 et deuxième extrémité 73 entre elles. Particulièrement, la première extrémité 71 et la deuxième extrémité 72 comportent chacune un bord incliné 73, par rapport au bord principal libre 79, ces bords inclinés 73 définissant chacun, relativement au support 2, un passage de réception 11 et de guidage du corps 30 de l'amortisseur 3. Notamment, un tel bord incliné 73 peut s'étendre sur tout ou partie de la première extrémité 71 d'une part ou de la deuxième extrémité 72 d'autre part. Autrement dit, le bord principal libre 79 peut, tel qu'illustré, relier entre eux le bord incliné 73 de la première extrémité 71 et le bord incliné 73 de la deuxième extrémité 72.

On entend notamment par « bord incliné » un bord de l'aile 70 s'étendant transversalement et à un angle strictement inférieur à 90° par rapport au bord principal libre 79 et/ou par rapport à au moins un plan orthogonal à l'aile 70. Par exemple ledit plan, non représenté, peut être parallèle ou sensiblement parallèle au plan médian primaire ou secondaire 5000, 6000 propre à l'organe d'indexage 5, 6 correspondant. Alternativement ou en combinaison, un plan considéré peut être perpendiculaire ou sensiblement perpendiculaire au plan médian primaire ou secondaire 5000, 6000 propre à l'organe d'indexage 5, 6 correspondant.

De manière particulière, une zone de jonction du bord principal libre 79 et du bord incliné 73 ou des bords inclinés 73 peut présenter un arrondi.

Le bord incliné 73 de la première extrémité 71 et le bord incliné 73 de la deuxième extrémité 72 de l'aile 7 permettent de guider l'amortisseur 3 au moins le long de deux directions distinctes, notamment deux directions orthogonales l'une à l'autre, jusqu'à une position adaptée dans laquelle l'amortisseur 3 peut alors être fixé au support 2. En l'espèce, lorsque l'agencement 1 est mis en oeuvre, de tels bords inclinés 73 permettent le guidage de l'amortisseur 3 le long de la direction longitudinale X et le long de la direction verticale Z.

Notamment, le bord incliné 73 de la première extrémité 71 de l'aile 70 et le bord incliné 73 de la deuxième extrémité 72 de l'aile 70 présentent une forme au moins partiellement complémentaire d'au moins une partie du corps 30 de l'amortisseur 3 de sorte à en optimiser le guidage et le maintien dans la position adéquate. Le support 2 forme ainsi un premier côté d'un tel passage de réception 11 du corps 30 de l'amortisseur 3 tandis que le bord incliné 73 de la première extrémité 71, ou de la deuxième extrémité 72, forme un deuxième côté, distinct du premier côté, d'un tel passage de réception 11.

Lorsque l'agencement 1 selon l'invention est mis en oeuvre, chacun des premier organe d'indexage 5 et deuxième organe d'indexage 6 participe à délimiter deux passages de réception 11 chacun apte à recevoir l'amortisseur 3 et à en guider le positionnement adéquat, un seul desdits deux passages 11 étant utilisé selon que l'organe d'indexage considéré est disposé en position d'indexage avant ou en position d'indexage arrière.

De manière particulière, le bord incliné 73 de la première extrémité 71 de l'aile 70 et le bord incliné 73 de la deuxième extrémité 72 de l'aile 70 présentent chacun un angle α compris entre 20 et 85° relativement à au moins une partie du support s'étendant au droit du bord incliné 73 correspondant. En d'autres termes, un tel angle α est défini relativement à un plan, tel que précédemment exposé, perpendiculaire au plan médian primaire ou secondaire 5000, 6000 de l'organe d'indexage 5, 6 correspondant. Un tel plan peut notamment s'étendre parallèlement à l'essentiel du bord principal libre 79.

Selon une autre formulation, le bord incliné 73 de la première extrémité 71 de l'aile 70 et le bord incliné 73 de la deuxième extrémité 72 de l'aile 70 présentent chacun un angle β compris entre 5 et 70° relativement à un plan parallèle ou sensiblement parallèle au plan médian primaire ou secondaire 5000, 6000 de l'organe d'indexage 5, 6 considéré.

Particulièrement, le bord incliné 73 de la première extrémité 71 de l'aile 70 et le bord incliné 73 de la deuxième extrémité 72 de l'aile 70 peuvent présenter un angle α égal ou sensiblement égal. Un tel angle α est particulièrement adapté à une forme prédéfinie du support 2.

En outre, le premier organe d'indexage 5 et/ou le deuxième organe d'indexage 6 comporte(nt) une embase de fixation 74 de l'organe d'indexage 5, 6 considéré sur le support 2 du véhicule 100.

L'embase de fixation 74 est, de manière préférentielle, plane ou sensiblement plane et configurée pour coopérer avec le support 2. L'embase de fixation 74 s'étend transversalement à l'aile 70, notamment, selon un exemple particulier, perpendiculairement à celle-ci. Additionnellement, l'embase de fixation 74 peut être reliée à l'aile 70. Autrement dit, l'embase de fixation 74 peut ainsi former une autre aile, distincte de l'aile 70, de la forme d'équerre ou de cornière telle que précédemment exposée.

Selon l'exemple illustré, l'embase de fixation 74 présente avantageusement une dimension, mesurée le long de la direction définie par l'axe d'extension 500, 600 considéré, inférieure à une dimension de l'aile 70.

En outre, l'embase de fixation 74 est notamment au moins disposée au niveau d'une portion centrale, le long de la direction définie par l'axe d'extension 500, 600 considéré, de l'aile 70.

En particulier, l'embase de fixation 74 peut être venue de matière avec l'aile 70. En d'autres termes, au moins l'aile 70 et l'embase de fixation 74 forment un ensemble monobloc de sorte qu'elles ne peuvent être dissociées l'une de l'autre sans résulter en la dégradation, voire la destruction de l'organe d'indexage 5, 6.

L'embase de fixation 74 délimite au moins une zone de fixation 75 de l'organe d'indexage sur le support 2. Avantageusement, l'embase de fixation 74 peut délimiter une pluralité de zones de fixations 75 de l'organe d'indexage 5, 6 sur le support 2.

Selon un exemple particulier préférentiel, le premier organe d'indexage 5 et/ou du deuxième organe d'indexage 6 est/sont monté(s) solidaire(s) du support 2 par soudage, notamment par au moins un point de soudure. A cette fin, l'embase de fixation 74 est dimensionnée de sorte à délimiter une zone de fixation 75 dont une dimension la plus longue est supérieure ou égale à 20 mm. On entend par dimension la plus longue un diamètre, pour une zone de fixation 75 circulaire ou sensiblement circulaire, ou une diagonale, pour une zone de fixation 75 polygonale.

En ce sens, au sein de l'agencement 1 selon l'invention, le support 2 comprend avantageusement au moins une première surface 21 plane ou sensiblement plane configurée pour permettre la fixation de l'embase de fixation 74 du premier organe d'indexage 5 ou de l'embase de fixation 74 du deuxième organe d'indexage 6. Le support 2 comprend, de manière similaire, au moins une deuxième surface 22 plane ou sensiblement plane configurée pour coopérer avec l'embase de fixation 74 du premier organe d'indexage 5 ou avec l'embase de fixation 74 du deuxième organe d'indexage 6.

Notamment, de telles première surface 21 et deuxième surface 22 peuvent coopérer avec tout ou partie de l'embase de fixation 74 considérée, c'est-à-dire avec au moins une zone de fixation 75 de l'embase de fixation 74 considérée. Un tel arrangement vise notamment à optimiser une zone de contact, et donc la liaison, entre l'organe d'indexage 5, 6 et le support 2.

L'angle α définissant les bords inclinés 73 tels que précédemment exposés peut alors être défini relativement à la surface plane, c'est-à-dire relativement à la première surface plane 21 ou à la deuxième surface plane 22, sur laquelle est fixé l'organe d'indexage 5, 6 considéré.

Afin d'assurer la résistance mécanique du premier organe d'indexage 5 et du deuxième organe d'indexage 6, ceux-ci peuvent optionnellement comporter au moins un renfort 76. Le renfort 76 s'étend entre l'aile 70 et l'embase de fixation 74 de l'organe d'indexage 5, 6 correspondant, faisant saillie perpendiculairement à l'embase de fixation 74 et/ou à l'aile 70. Il peut notamment être obtenu par emboutissage de l'organe d'indexage 5, 6, par exemple par réalisation d'un bossage dans l'angle de liaison de l'aile 70 et de l'embase de fixation 74 de l'équerre ou de la cornière.

Avantageusement, le renfort 76 peut présenter un positionnement central, le long de la direction définie par l'axe d'extension 500, 600 considéré, au sein de l'embase de fixation 74 et/ou de l'aile 70. Le renfort 76 peut alors, selon l'exemple particulier illustré, être interposé, le long de la direction définie par l'axe d'extension 500, 600 considéré, entre deux zones de fixation 75 distinctes comprises dans une même portion de fixation 74.

Selon une alternative non représentée, le premier organe d'indexage 5 et/ou le deuxième organe d'indexage 6 peu(ven)t comprendre une pluralité de renforts 76 reliant l'aile 70 à l'embase de fixation 74.

De manière avantageuse, le premier organe d'indexage 5 et/ou le deuxième organe d'indexage 6 peu(ven)t comprendre une patte de guidage 77 de la position de l'organe d'indexage 5, 6 relativement au support 2. La patte de guidage 77 peut s'étendre transversalement à l'aile 70 de l'organe d'indexage correspondant, notamment la patte de guidage 77 peut s'étendre orthogonalement à l'aile 70 de l'organe d'indexage 5, 6 considéré.

La patte de guidage 77 comprend une ouverture ou perforation 78, notamment sensiblement en son centre, permettant le déplacement et le positionnement de l'organe d'indexage 5, 6 jusqu'à une position adaptée de fixation sur le support 2 lors de l'assemblage de l'agencement 1 selon l'invention. Par exemple, une telle perforation 78 peut être configurée pour coopérer avec un outil et/ou une machine d'assemblage d'au moins une partie de l'agencement selon l'invention.

Alternativement ou en combinaison, la patte de guidage 77 peut être issue de l'embase de fixation 74 de l'organe d'indexage. En particulier, la patte de guidage 77 peut s'étendre parallèlement ou sensiblement parallèlement à ladite portion de fixation 74.

Selon l'exemple de réalisation illustré, la patte de guidage 77 s'étend, de préférence, à l'opposé de l'aile 70 relativement à l'embase de fixation 74. En d'autres termes, l'embase de fixation 74 est interposée entre l'aile 70 et la patte de guidage 77 le long d'au moins une direction, notamment, en l'espèce, sensiblement le long de la direction longitudinale X lorsque l'agencement est assemblé.

Notamment, selon un exemple particulier, l'aile 70, l'embase de fixation 74 et la patte de guidage 77 d'un même organe d'indexage 5, 6 forment un ensemble monobloc.

Ainsi, lorsque l'agencement 1 selon l'invention est assemblé, le premier organe d'indexage 5 et le deuxième organe d'indexage 6 du dispositif d'indexage 4 sont rapportés et montés solidaire du support 2 par l'intermédiaire de leur embase de fixation 74 respective. En l'espère, le premier organe d'indexage 5 est positionné de sorte à assurer l'indexage avant de l'amortisseur 3 tandis que le deuxième organe d'indexage 6 est positionné afin d'assurer l'indexage arrière de ce même amortisseur 3.

Avantageusement, le premier organe d'indexage 5 et le deuxième organe d'indexage 6 du dispositif d'indexage 4 selon l'invention permettent, tels que précédemment exposés, d'assurer indifféremment l'indexage avant et l'indexage arrière de l'amortisseur 3 relativement au support 2, c'est-à-dire que les positions du premier organe d'indexage 5 et du deuxième organe d'indexage 6 pourraient être inversées de sorte que le premier organe d'indexage 5 soit positionné afin d'assurer l'indexage arrière de l'amortisseur et que le deuxième organe d'indexage 6 soit positionné afin d'assurer l'indexage avant de l'amortisseur.

Une telle alternative de positionnement est notamment obtenue par pivotement de l'organe d'indexage 5, 6 considéré, un tel pivotement pouvant, selon un exemple non limitatif, être réalisé autour d'un axe de rotation centré sur la perforation 78, puis par positionnement de l'embase de fixation 74 sur la première surface plane 21 ou la deuxième surface plane 22 du support en vue du soudage de l'organe d'indexage sur le support 2. Notamment, le changement de positionnement de l'organe d'indexage considéré depuis une position d'indexage avant vers une position d'indexage arrière, ou inversement, peut comprendre un pivotement de l'organe d'indexage 5, 6 de l'ordre de 120 à 240° autour de l'axe de rotation considéré. Notamment, un tel axe de rotation, non représenté, peut s'étendre parallèlement à la direction transversale.

Le premier organe d'indexage 5 et le deuxième organe d'indexage 6 sont ainsi disposés de part et d'autre d'un plan principal médian 2000 du support 2. En outre, le premier organe d'indexage 5 et le deuxième organe d'indexage 6 sont disposés de sorte qu'une distance séparant les pattes de guidage 77 propres à chacun des premier et deuxième organes d'indexage 5, 6 soit inférieure à une distance séparant l'aile 70 desdits organes d'indexage 5, 6 dudit plan principal médian 2000.

En d'autres termes, la patte de guidage 77 et l'embase de fixation 74 propres à chacun des premier et deuxième organes d'indexage 5, 6 sont interposées entre l'aile 70 du premier organe d'indexage 5 et l'aile 70 du deuxième organe d'indexage 6, notamment le long d'un axe orthogonal au plan principal médian 2000 du support 2.

Particulièrement, le premier organe d'indexage 5 et/ou le deuxième organe d'indexage 6 est/sont configuré(s) de sorte à coopérer avec des parties distinctes du corps 30 de l'amortisseur 3, notamment des parties distales 31, 32 du corps 30 de l'amortisseur 3, les plus distantes du plan principal médian 2000 du support 2.

La présente invention propose ainsi un agencement pour une caisse d'un véhicule automobile selon la revendication indépendante 1.

Un tel agencement, ou dispositif, présente l'avantage de réduire le nombre de références de pièces détachées, simplifiant ainsi la gestion des stocks de pièces détachées et réduisant de même les coûts de production et les risques d'erreurs lors du montage.

Toutefois, la présente invention n'est pas limitée aux moyens et configurations décrits et illustrés ici et s'étend également à toutes les configurations qui relèvent de la portée des revendications annexées.

## Revendications

1. Agencement (1) pour une caisse d'un véhicule (100) automobile, l'agencement (1) comprenant un support (2) pour un système de suspension d'une roue du véhicule (100), un amortisseur (3) dont un corps (30) est apte à être fixé sur ledit support (2) et un dispositif d'indexage (4) comprenant un premier organe d'indexage (5) et un deuxième organe d'indexage (6) rapportés et chacun monté solidaire du support (2), **caractérisé en ce que** le premier organe d'indexage (5) et le deuxième organe d'indexage (6) sont chacun configurés pour indifféremment assurer l'indexage avant et l'indexage arrière de l'amortisseur (3), notamment du corps (30) de l'amortisseur (3), relativement au support (2) de sorte à assurer son positionnement adéquat relativement audit support (2).

2. Agencement (1) selon la revendication précédente, dans lequel le premier organe d'indexage (5) et le deuxième organe d'indexage (6) comprennent chacun une aile (70) coopérant avec le corps (30) de l'amortisseur (3) de sorte à assurer son positionnement adéquat relativement au support (2).

3. Agencement (1) selon la revendication précédente dans lequel au moins l'aile (70) du premier organe d'indexage (5) et/ou l'aile (70) du deuxième organe d'indexage (6) présente(nt) une structure et/ou une géométrie symétrique(s) ou sensiblement symétrique(s) relativement à un plan médian (5000, 6000) passant par l'aile (70) propre à l'organe d'indexage (5, 6) correspondant.

4. Agencement (1) selon l'une des revendications 2 ou 3, dans lequel une première extrémité (71) et une deuxième extrémité (72) de l'aile (70) du premier organe d'indexage (5) et/ou de l'aile (70) du deuxième organe d'indexage (6) comportent chacune un bord incliné (73) relativement à un bord principal libre (79) de l'aile (70), le bord principal libre (79) reliant lesdites première extrémité (71) et deuxième extrémité (72) entre elles et le bord incliné (73) définissant, relativement au support (2), un passage de réception (11) et de guidage du corps (30) de l'amortisseur (3).

5. Agencement (1) selon la revendication précédente, dans lequel le bord incliné (73) de la première extrémité (71) de l'aile (70) et le bord incliné (73) de la deuxième extrémité (72) de l'aile (70) du premier organe d'indexage (5) et/ou de l'aile (70) du deuxième organe d'indexage (6) présentent une forme complémentaire d'au moins une partie du corps (30) de l'amortisseur (3).

6. Agencement (1) selon la revendication 4 ou 5, dans lequel le bord incliné (73) de la première extrémité (71) de l'aile (70) et le bord incliné (73) de la deuxième extrémité (72) de l'aile (70) du premier organe d'indexage (5) et/ou de l'aile (70) du deuxième organe d'indexage (6) présentent un angle α, relativement à une partie du support (2) s'étendant au droit du bord incliné (73) correspondant, égal ou sensiblement égal, l'angle α étant compris entre 20 et 85°.

7. Agencement (1) selon l'une des revendications 2 à 6, dans lequel le premier organe d'indexage (5) et/ou le deuxième organe d'indexage (6) comporte(nt) une embase de fixation (74), plane ou essentiellement plane, délimitant au moins une zone de fixation (75) de l'organe d'indexage (5, 6) correspondant sur le support (2), l'embase de fixation (74) étant reliée à l'aile (70).

8. Agencement (1) selon la revendication précédente, dans lequel le premier organe d'indexage (5) et/ou le deuxième organe d'indexage (6) comporte(nt) au moins un renfort (76) s'étendant entre l'aile (70) et l'embase de fixation (74) de l'organe d'indexage (5, 6) correspondant.

9. Agencement (1) selon l'une des revendications 2 à 8, dans lequel le premier organe d'indexage (5) et/ou le deuxième organe d'indexage (6) compren(nent)(d) une patte de guidage (77) de la position de l'organe d'indexage (5, 6) considéré relativement au support (2), la patte de guidage (77) s'étendant transversalement à l'aile (70) de l'organe d'indexage (5, 6) correspondant et/ou la patte de guidage (77) étant issue de l'embase de fixation (74) de l'organe d'indexage (5, 6) correspondant et s'étendant parallèlement ou sensiblement parallèlement à ladite portion de fixation (74).

10. Agencement (1) selon l'une des revendications précédentes, dans lequel le premier organe d'indexage (5) et le deuxième organe d'indexage (6) présentent une structure et/ou une géométrie identique(s) ou sensiblement identique(s).

11. Véhicule (100) automobile comprenant au moins un agencement (1) selon l'une des revendications 1 à 10.

## Patentansprüche

1. Anordnung (1) für einen Rahmen eines Kraftfahrzeugs (100), wobei die Anordnung (1) Folgendes umfasst: einen Träger (2) für ein Aufhängungssystem eines Fahrzeugrads (100), einen Stoßdämpfer (3) mit einem Körper (30), der am Träger (2) befestigt sein kann, und eine Indexierungsvorrichtung (4), die ein erstes Indexierungsorgan (5) und ein zweites Indexierungsorgan (6) umfasst, die am Träger (2) angebracht und fest mit diesem verbunden sind, **dadurch gekennzeichnet, dass** das erste Indexierungsorgan (5) und das zweite Indexierungsorgan (6) jeweils dazu ausgelegt sind, unterschiedslos die vordere und die hintere Indexierung des Stoßdämpfers (3), insbesondere des Körpers (30) des Stoßdämpfers (3), in Bezug auf den Träger (2) zu gewährleisten, um seine adäquate Positionierung in Bezug auf den Träger (2) zu gewährleisten.

2. Anordnung (1) nach dem vorangehenden Anspruch, wobei das erste Indexierungsorgan (5) und das zweite Indexierungsorgan (6) jeweils einen Flügel (70) umfassen, der mit dem Körper (30) des Stoßdämpfers (3) zusammenwirkt, um seine adäquate Positionierung in Bezug auf den Träger (2) zu gewährleisten.

3. Anordnung (1) nach dem vorangehenden Anspruch, wobei zumindest der Flügel (70) des ersten Indexierungsorgans (5) und/oder der Flügel (70) des zweiten Indexierungsorgans (6) eine Struktur und/oder eine Geometrie aufweisen, die in Bezug auf eine Mittelebene (5000, 6000), die durch den entsprechenden Flügel (70) des jeweiligen Indexierungsorgans (5, 6) verläuft, symmetrisch oder im Wesentlichen symmetrisch sind.

4. Anordnung (1) nach einem der Ansprüche 2 oder 3, wobei ein erstes Ende (71) und ein zweites Ende (72) des Flügels (70) des ersten Indexierungsorgans (5) und/oder des Flügels (70) des zweiten Indexierungsorgans (6) jeweils eine Kante (73) aufweisen, die in Bezug auf freie Hauptkante (79) des Flügels (70) geneigt ist, wobei die freie Hauptkante (79) das erste Ende (71) und das zweite Ende (72) miteinander verbindet und wobei die geneigte Kante (73) in Bezug auf den Träger (2) einen Durchgang (11) zur Aufnahme und Führung des Körpers (30) des Stoßdämpfers (3) definiert.

5. Anordnung (1) nach dem vorangehenden Anspruch, wobei die geneigte Kante (73) des ersten Endes (71) des Flügels (70) und die geneigte Kante (73) des zweiten Endes (72) des Flügels (70) des ersten Indexierungsorgans (5) und/oder des Flügels (70) des zweiten Indexierungsorgans (6) eine Form aufweisen, die zu einem Teil des Körpers (30) des Stoßdämpfers (3) komplementär ist.

6. Anordnung (1) nach Anspruch 4 oder 5, wobei die geneigte Kante (73) des ersten Endes (71) des Flügels (70) und die geneigte Kante (73) des zweiten Endes (72) des Flügels (70) des ersten Indexierungsorgans (5) und/oder des Flügels (70) des zweiten Indexierungsorgans (6) jeweils einen Winkel α relativ zu einem Teil des Trägers (2) aufweisen, wobei sich die Winkel direkt von der entsprechenden geneigten Kante (73) erstrecken und gleich oder im Wesentlichen gleich sind, wobei die Winkel α zwischen 20 und 85° betragen.

7. Anordnung (1) nach einem der Ansprüche 2 bis 6, wobei das erste Indexierungsorgan (5) und/oder das zweite Indexierungsorgan (6) einen ebenen oder im Wesentlichen ebenen Befestigungssockel (74) aufweisen, der zumindest einen Befestigungsbereich (75) des entsprechenden Indexierungsorgans (5, 6) auf dem Träger (2) begrenzt, wobei der Befestigungssockel (74) mit dem Flügel (70) verbunden ist.

8. Anordnung (1) nach dem vorangehenden Anspruch, wobei das erste Indexierungsorgan (5) und/oder das zweite Indexierungsorgan (6) zumindest eine Verstärkung (76) aufweisen, die sich zwischen dem Flügel (70) und dem Befestigungssockel (74) des entsprechenden Indexierungsorgans (5, 6) erstreckt.

9. Anordnung (1) nach einem der Ansprüche 2 bis 8, wobei das erste Indexierungsorgan (5) und/oder das zweite Indexierungsorgan (6) eine Lasche (77) zur Führung der Position des betreffenden Indexierungsorgans (5, 6) in Bezug auf den Träger (2) umfassen, wobei sich die Führungslasche (77) quer zum Flügel (70) des entsprechenden Indexierungsorgans (5, 6) erstreckt und/oder wobei die Führungslasche (77) vom Befestigungssockel (74) des entsprechenden Indexierungsorgans (5, 6) ausgeht und sich parallel oder im Wesentlichen parallel zum Befestigungsabschnitt (74) erstreckt.

10. Anordnung (1) nach einem der vorangehenden Ansprüche, wobei das erste Indexierungsorgan (5) und das zweite Indexierungsorgan (6) eine Struktur und/oder eine Geometrie aufweisen, die identisch oder im Wesentlichen identisch sind.

11. Kraftfahrzeug (100), umfassend mindestens eine Anordnung (1) nach einem der Ansprüche 1 bis 10.

## Claims

1. Arrangement (1) for a body of an automotive vehicle (100), the arrangement (1) comprising a support (2) for a suspension system suspending a wheel of the vehicle (100), a shock absorber (3) of which a body (30) is able to be fixed to said support (2) and an indexing device (4) comprising a first indexing member (5) and a second indexing member (6) which are attached and each of which is mounted securely on the support (2), **characterized in that** the first indexing member (5) and the second indexing member (6) are each configured to be equally capable of indexing the front and indexing the rear of the shock absorber (3), notably the body (30) of the shock absorber (3), relative to the support (2) so as to ensure the suitable positioning thereof relative to said support (2).

2. Arrangement (1) according to the preceding claim, wherein the first indexing member (5) and the second indexing member (6) each comprise a flange (70) collaborating with the body (30) of the shock absorber (3) so as to ensure the suitable positioning thereof relative to the support (2).

3. Arrangement (1) according to the preceding claim, wherein at least the flange (70) of the first indexing member (5) and/or the flange (70) of the second indexing member (6) have/has a structure and/or a geometry exhibiting symmetry or near-symmetry relative to a midplane (5000, 6000) passing through the flange (70) specific to the corresponding indexing member (5, 6).

4. Arrangement (1) according to one of Claims 2 and 3, wherein a first end (71) and a second end (72) of the flange (70) of the first indexing member (5) and/or of the flange (70) of the second indexing member (6) each has an inclined edge (73) that is inclined relative to a free main edge (79) of the flange (70), the free main edge (79) connecting said first end (71) and second end (72) to one another, and the inclined edge (73) defining, relative to the support (2), a receiving passage (11) for receiving and guiding the body (30) of the shock absorber (3) .

5. Arrangement (1) according to the preceding claim, wherein the inclined edge (73) of the first end (71) of the flange (70) and the inclined edge (73) of the second end (72) of the flange (70) of the first indexing member (5) and/or of the flange (70) of the second indexing member (6) have a shape that complements at least part of the body (30) of the shock absorber (3).

6. Arrangement (1) according to Claim 4 or 5, wherein the inclined edge (73) of the first end (71) of the flange (70) and the inclined edge (73) of the second end (72) of the flange (70) of the first indexing member (5) and/or of the flange (70) of the second indexing member (6) make angles α, relative to a part of the support (2) extending in line with the corresponding inclined edge (73), that are equal or substantially equal, the angle α being comprised between 20 and 85°.

7. Arrangement (1) according to one of Claims 2 to 6, wherein the first indexing member (5) and/or the second indexing member (6) comprise/comprises a planar or essentially planar securing base (74) delimiting at least one securing zone (75) for securing the corresponding indexing member (5, 6) to the support (2), the securing base (74) being connected to the flange (70).

8. Arrangement (1) according to the preceding claim, wherein the first indexing member (5) and/or the second indexing member (6) comprise/comprises at least one reinforcement (76) extending between the flange (70) and the securing base (74) of the corresponding indexing member (5, 6).

9. Arrangement (1) according to one of Claims 2 to 8, wherein the first indexing member (5) and/or second indexing member (6) comprise/comprises a guide tab (77) guiding the position of the indexing member (5, 6) concerned relative to the support (2), the guide tab (77) extending transversely to the flange (70) of the corresponding indexing member (5, 6) and/or the guide tab (77) beginning in the securing base (74) of the corresponding indexing member (5, 6) and extending parallel or substantially parallel to said securing portion (74).

10. Arrangement (1) according to one of the preceding claims, wherein the first indexing member (5) and the second indexing member (6) have identical or substantially identical structures and/or geometries.

11. Automotive vehicle (100) comprising at least one arrangement (1) according to one of Claims 1 to 10.
